# EUROPÄISCHE PATENTSCHRIFT

(11) **EP 4 379 328 B1**
(45) Veröffentlichungstag und Bekanntmachung des Hinweises auf die Patenterteilung: **04.02.2026**
(21) Anmeldenummer: 23211052.8
(22) Anmeldetag: 21.11.2023
(51) Int. Cl.: G01F 23/284, H01Q 1/22, H01Q 13/24

(54) **FELDGERÄT**
FIELD DEVICE
APPAREIL DE TERRAIN

(30) Priorität: 30.11.2022 DE 102022131745
(43) Veröffentlichungstag der Anmeldung: 05.06.2024
(73) Patentinhaber: VEGA Grieshaber KG, 77709 Wolfach (DE)
(72) Erfinder: Haas, Jürgen, 77709 Oberwolfach (DE); Ilg, Thomas, 77716 Haslach (DE); Bader, Tobias, 77716 Haslach (DE)
(74) Vertreter: Patentanwälte Bauer Vorberg Kayser

(56) Entgegenhaltungen:
- DE-A1- 102014 107 781
- US-A1- 2022 074 783
- US-B2- 11 187 570
- US-B2- 9 110 165

## Beschreibung

Die vorliegende Erfindung betrifft ein Feldgerät gemäß dem Oberbegriff des Patentanspruchs 1. Insbesondere betrifft die Erfindung ein Feldgerät in Form eines nach dem Radarprinzip arbeitenden Füllstandmessgerät (auch als Radarsensor bezeichnet).

In der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandmessgeräte, Grenzstandmessgeräte und Druckmessgeräte mit Sensoreinheiten, die die entsprechenden Prozessgrößen Füllstand, Grenzstand oder Druck oder auch davon abgeleitete Prozessgrößen erfassen. "Feld" bezeichnet dabei den Bereich außerhalb von Leitwarten. Feldgeräte können damit insbesondere Aktoren, Sensoren, Datensammler (Datenlogger) und Messumformer sein. Häufig sind solche Feldgeräte mit übergeordneten Einheiten, zum Beispiel Leitsystemen oder Steuereinheiten, verbunden. Diese übergeordneten Einheiten dienen zur Prozesssteuerung, Prozessvisualisierung und/oder Prozessüberwachung. Die aus dem Stand der Technik bekannten Feldgeräte weisen in der Regel ein Gehäuse, eine Sensoreinheit und ein in dem Gehäuse angeordnetes Elektronikmodul auf. Die gemessenen Prozessgrößen werden üblicherweise ausgewertet und dessen Ergebnisse können beispielsweise zur Erzeugung eines Schaltbefehls und/oder einer proportionalen analogen oder digitalen Ausgangsgröße oder zur Anzeige von physikalischen Eigenschaften oder Prozessgrößen genutzt werden.

Feldgeräte werden zum Teil auch für die Überwachung und Steuerung von Prozessen mit sehr hohen Prozesstemperaturen eingesetzt. Insbesondere im Bereich der hygienischen Anwendungen, bspw. in der Lebensmittel- oder Pharmaindustrie werden solch hohe Temperaturen erreicht, wenn bspw. ein CIP- (Clean in Place - Reinigung am Einbauort) oder SIP- (Sterilisation in Place - Sterilisierung am Einbauort) Prozess des Prozessbehälters und des Feldgeräts erfolgt. Bei diesen Prozessen werden die Prozessbehälter und die verbaute Messtechnik mittels unterschiedlicher Reinigungslösungen und Wasserdampf bei erhöhten Temperaturen und erhöhtem Druck gereinigt und/oder sterilisiert. Die hohen Temperaturen von teilweise bis zu 150 °C müssen bspw. von einer temperaturempfindlichen Elektronik des Feldgeräts abgehalten werden.

Im Feldgerät selbst ist üblicherweise Elektronik angeordnet, welche nur eine gewisse maximale Einsatztemperatur aufweist, die nicht überschritten werden darf. Typischerweise darf die Elektronik nicht dauerhaft auf über 90° erhitzt werden. Dies betrifft insbesondere in der Elektronik verbaute integrierte Schaltungen und eingebaute Chips, wie z.B. auch einen Radarchip. Das Feldgerät muss daher so aufgebaut sein, dass es auch bei hohen Betriebstemperaturen eingesetzt werden kann und gleichzeitig die sensible Elektronik nicht wärmegeschädigt wird.

Die Wärme aus dem Prozess wird vorrangig über den Prozessanschluss bzw. ein zum Prozess gerichtetes Sensorelement in das Feldgerät eingetragen. Im Falle eines Radarsensors kann die Wärme zusätzlich zum Prozessanschluss auch über ein Antennensystem zur Abstrahlung der Radarsignale, d.h. insbesondere eine Linse und eine Hornantenne in das Feldgerät eingetragen werden.

Im Stand der Technik existieren verschiedene Maßnahmen, wie bspw. Abstandsstücke, Kühlkörper, isolierte Gehäuse und aktive Kühleinrichtungen, mittels derer der Temperatureinsatzbereich von Feldgeräten zumindest kurzzeitig oder auch dauerhaft erweitert werden kann.

Aus US 11,187,570 B2 ist ein Füllstandmessgerät mit hoher Temperaturbeständigkeit bekannt.

Abstandsstücke oder auch Distanzstücke vergrößern den Abstand zwischen dem prozessnahen Ende des Feldgeräts und einer Elektronik. Durch die Vergrößerung des Abstands wird erreicht, dass eine Temperaturerhöhung in der Prozessumgebung nicht oder nur reduziert bis zu der Elektronik vordringt, sodass diese nicht geschädigt wird. Es wird an dieser Ausgestaltung jedoch als nachteilig empfunden, dass sich die Baulänge des Feldgeräts mit steigender zu erwartender Temperatur nicht unerheblich vergrößert, was die Einsatzmöglichkeiten dieser Feldgeräte reduziert.

Alternativ können thermisch hochisolierte Gehäuse vorgesehen sein, bei denen ein Innenraum des Gehäuses, in dem bspw. die Elektronik angeordnet ist, durch Isolationsmaterialien oder thermische Trennung, bspw. durch ein doppelwandiges Gehäuse vor thermischen Einflüssen geschützt ist. Solche Gehäuse sind aber aufwändig und kostenintensiv in der Herstellung und meist deutlich größer als herkömmliche Gehäuse vergleichbarer Feldgeräte.

Ferner ist es möglich, aktive Kühleinrichtungen vorzusehen. Solche aktiven Kühleinrichtungen, die bspw. nach dem Prinzip einer Kältemaschine arbeiten, sind technisch aufwändig und teuer in der Herstellung. Ferner haben solche aktiven Kühleinrichtungen einen hohen Energiebedarf und können daher aufgrund des begrenzten Energiebudgets in viele Feldgeräte nicht ohne weiteres integriert werden.

Gemäß dem Stand der Technik ist die Elektronik im einfachsten Fall derart weit vom prozessseitigen Ende des Feldgerätes entfernt angeordnet, dass über die Gehäuseaußenwand außerhalb des Prozesses eine ausreichende Wärmemenge an die Umgebung abgegeben werden kann, damit die Elektronik selbst auch bei hohen Betriebstemperaturen nicht überhitzt. Allerdings hat dies zur Folge, dass die Elektronik sehr weit entfernt vom Prozessanschluss angeordnet werden muss und somit das Feldgerät besonders große Außenmaße aufweist.

Es wird an diesen Feldgeräten als Nachteil empfunden, dass diese eine sehr lange Bauform aufweisen und daher teilweise nur schwierig, oder aufgrund der langen Bauform nicht eingesetzt werden können. Es gibt daher den allgemeinen Bedarf an kompakten Feldgeräten, die auch bei hohen Prozesstemperaturen eingesetzt werden können.

Die zugrundliegende Aufgabe der Erfindung ist es, ein Feldgerät zur Verfügung zu stellen, mittels welchem auch bei geringer Bauhöhe ein ausreichender Schutz der Elektronik gegenüber Wärme realisiert ist.

Die Lösung der Aufgabe erfolgt erfindungsgemäß mit den Merkmalen der unabhängigen Ansprüche. Weitere Ausführungsformen und Vorteile sind in Zusammenhang mit den abhängigen Ansprüchen beschrieben.

Ein erfindungsgemäßes Feldgerät umfasst ein Gehäuse, wobei das Gehäuse ein erstes, prozessfernes Ende und ein zweites, prozessnahes Ende aufweist. Als Ende werden hier insbesondere Abschnitte des Gehäuses bezeichnet, welche in Richtung Prozess oder abgewandt des Prozesses orientiert sind. Insbesondere umfasst ein Ende einen Abschnitt, der sich über bis zu einem Drittel der Länge des Gehäuses erstreckt.

In dem Gehäuse ist an dem ersten, prozessfernen Ende eine Elektronik (insbesondere eine Hochfrequenz-Elektronik) angeordnet. Bei der Elektronik handelt es sich insbesondere um eine Auswerte- und/oder Steuerelektronik. Im Falle eines Radarsensors umfasst die Elektronik insbesondere auch einen Radarchip bzw. einen Transducer zur Erzeugung und zum Empfang von Radarstrahlung.

In dem Gehäuse ist ferner an dem zweiten, prozessnahen Ende ein Sensorelement angeordnet. Als Sensorelement kann beispielsweise eine Schwinggabel oder eine Druckmesszelle dienen. Insbesondere kann hier jedoch als Sensorelement eine Hornantenne und ggf. eine dazu korrespondierende Linse angeordnet sein.

Das Gehäuse weist zudem an dem zweiten, prozessnahen Ende einen Prozessanschluss auf, mittels welchem das Feldgerät an einem Behälter befestigbar ist. Der Prozessanschluss ist Teil des Gehäuses und kann einstückig mit dem weiteren Teil des Gehäuses oder auch separat ausgebildet sein. Der Prozessanschluss bildet die mechanische Schnittstelle zwischen dem Feldgerät und der Prozessumgebung, also insbesondere dem Behälter aus.

Wie vorstehend schon erläutert, wird insbesondere über einen Teil des Prozessanschlusses, welcher mit einem Behälter in Verbindung steht und insbesondere in einen Behälter hineinragt, und/oder durch ein am zweiten, prozessnahen Ende angeordnetes Sensorelement Wärme aus der Prozessumgebung in das Feldgerät eingetragen.

Erfindungsgemäß weist das Feldgerät einen ersten Wärmeleitpfad auf, welcher sich von dem zweiten, prozessnahen Ende zu einem Abstrahlbereich erstreckt. Ferner weist das Feldgerät mindestens einen zweiten Wärmeleitpfad auf, welcher sich von dem zweiten prozessnahen Ende zur Elektronik erstreckt, wobei die Weglänge des ersten Wärmeleitpfades kleiner ist als die Weglänge des zweiten Wärmeleitpfades. Die Wärmeleitpfade sind so ausgelegt, dass der thermische Widerstand des ersten Wärmeleitpfades geringer ist als der thermische Widerstand des zweiten Wärmeleitpfades. Als Abstrahlbereich wird dabei ein Bereich des Gehäuses bezeichnet, an welchem der überwiegende Teil der Wärme, die von dem Prozessanschluss und dem Sensorelement in das Gehäuse eingeleitet wird, abgegeben wird. Der Abstrahlbereich ist beabstandet zur Elektronik und beabstandet zum ersten, prozessfernen Ende und zum zweiten, prozessnahen Ende angeordnet.

Der thermische Widerstand des ersten Wärmeleitpfades ist insbesondere um 50% geringer und vorzugsweise um 70% und besonders bevorzugt um 90% geringer als der thermische Widerstand des mindestens einen zweiten Wärmeleitpfades.

Das Feldgerät ist demnach so ausgelegt, dass trotzdem der Abstrahlbereich nah an der Hitzequelle (d.h. dem Behälter) ist, die Wärme über den Abstrahlbereich abgeführt werden kann und die Elektronik somit nicht über die zulässige Temperatur aufgeheizt wird.

Die Baugröße des Feldgerätes, d.h. der Abstand zwischen Elektronik und dem zweiten, prozessnahen Ende, kann gering bleiben. Die Wärme wird effektiv von der Wärmequelle an den Abstrahlbereich und schließlich an die Umgebung abgegeben. Durch die vergleichsweise große Außenfläche des Abstrahlbereichs als Teil des Gehäuses entsteht hier eine effektive Konvektion.

Es wird so eine Möglichkeit zur passiven Kühlung des Feldgeräts geschaffen. Unter passiver Kühlung wird gemäß der vorliegenden Anmeldung verstanden, dass der Vorgang der Kühlung selbst ohne die Zufuhr externer Energie erfolgt. Die Kühlung erfolgt damit im vorliegenden Fall durch einen gezielten Abtransport von in das Feldgerät eingetragener Wärme über den ersten Wärmeleitpfad zum Abstrahlbereich und die Abgabe der Wärme durch Abstrahlung und Konvektion. Durch eine passive Kühlung wird ein besonders einfacher und kompakter Aufbau erreicht, der zudem auch kostengünstig realisiert werden kann.

Erfindungsgemäß ist der Abstrahlbereich an dem Prozessanschluss angeordnet und einstückig mit dem Prozessanschluss ausgebildet.

Es kann sich bei dem Abstrahlbereich um einen Stutzen handeln, welcher an dem Prozessanschluss angeordnet ist. Als Stutzen wird dabei ein an dem Prozessanschluss angeordnetes Rohrstück bezeichnet. Der Stutzen kann einstückig mit dem Prozessanschluss ausgebildet sein. Alternativ können der Stutzen und der Prozessanschluss auch zweiteilig ausgebildet sein oder der Stutzen ist Teil des Gehäuses.

Insbesondere ist der Abstrahlbereich an einer dem Prozess abgewandten Seite des Prozessanschlusses angeordnet. Insbesondere ist der Abstrahlbereich außerhalb eines Kontaktabschnittes des Gehäuses angeordnet, wobei der Kontaktabschnitt zur Anordnung in einem Behälter vorgesehen ist oder in direktem Kontakt mit dem Behälter steht. Der Kontaktabschnitt kann z.B. ein Gewindeabschnitt sein, mittels welchem das Feldgerät mit einem Behälter verbunden wird. Der Abstrahlbereich ist insbesondere beabstandet zu dem Kontaktabschnitt angeordnet.

Bei einem Prozessanschluss mit einem Kontaktabschnitt und einem Außenabschnitt, wobei der Außenabschnitt in einer Einbaulage des Feldgerätes an einem Behälter außerhalb des Behälters angeordnet ist, weist der Außenabschnitt insbesondere einen Angriffsabschnitt für ein Werkzeug auf. Der Abstrahlbereich ist dann insbesondere unmittelbar angrenzend an den Angriffsabschnitt angeordnet. Der Abstrahlbereich kann alternativ gleichzeitig ein Angriffsabschnitt für ein Werkzeug sein.

In einer weiteren praktischen Ausführungsform ist der Prozessanschluss zweiteilig ausgebildet und weist einen Kontaktabschnitt und einen Außenabschnitt auf. Der Kontaktabschnitt steht dabei mit dem Behälter und einer Hitzequelle in Verbindung, es handelt sich insbesondere um einen Gewindeabschnitt. Der Außenabschnitt befindet sich in Einbaulage des Feldgerätes außerhalb des Behälters. Der Kontaktabschnitt ist insbesondere aus einem ersten, weniger gut wärmeleitenden Material wie Edelstahl oder Kunststoff ausgebildet und der Angriffsabschnitt aus einem zweiten, gut wärmeleitenden Material wie Aluminium oder Messing. Zwischen dem Kontaktabschnitt und dem Angriffsabschnitt kann zudem ein thermisch isolierendes Material angeordnet sein.

Ferner kann in dem Gehäuse ein Zwischenstück (auch als Druckstück bezeichnet) angeordnet sein, welches sich von dem zweiten, prozessnahen Ende in Richtung des ersten, prozessfernen Endes erstreckt, und wobei das Zwischenstück an seinem prozessabgewandten Ende beabstandet zum Abstrahlbereich angeordnet ist. Das heißt, zwischen dem Zwischenstück und dem Abstrahlbereich ist ein Spalt ausgebildet. Dieser Spalt kann zusätzlich mit thermisch isolierendem Material gefüllt sein. Das Zwischenstück kann ein separates Teil sein oder einstückig mit dem Prozessanschluss bzw. dem Gehäuse ausgebildet sein.

Das Zwischenstück dient insbesondere auch zur Befestigung eines Hohlleiters im Falle eines Radarmessgerätes. Dazu weist das Zwischenstück insbesondere an der prozessabgewandten Stirnseite einen ringförmigen Vorsprung auf, wobei der Außendurchmesser ringförmigen Vorsprungs kleiner ist als der Außendurchmesser des angrenzenden Abschnitts des Zwischenstückes. Die umschlossene Fläche des ringförmigen Vorsprungs dient insbesondere zur Aufnahme und Befestigung eines Hohlleiters. Der Spalt bewirkt eine thermische Entkopplung zwischen Hohlleiter und Gehäuse bzw. Abstrahlbereich. Insbesondere dann, wenn die Anbindung des Hohlleiters auf gleicher Höhe liegt wie der Abstrahlbereich. Zwischen dem Zwischenstück und dem Hohlleiter kann zusätzlich eine thermisch isolierende Schicht angeordnet sein.

Falls ein Zwischenstück vorhanden ist, so kann es einerseits Teil des ersten Wärmeleitpfades, indem es Wärme von dem Prozessanschluss und/oder dem Sensorelement (z.B. der Linse) zum Abstrahlbereich leitet. Das Zwischenstück kann anderseits gleichzeitig als Hornantenne zur Weiterleitung und Formgebung von Radarstrahlung dienen.

Das Zwischenstück ist insbesondere aus Messing, Aluminium, Kupfer oder Titan.

Das Zwischenstück kann ferner an der dem Prozess abgewandten Stirnseite eine zumindest teilweise umlaufende Vertiefung bzw. Nut aufweisen, welche einer Wärmeübertragung an den Hohlleiter weiter entgegenwirkt.

Zwischen den Prozessanschluss und dem Zwischenstück kann zur Verbesserung der Wärmeübertragung zudem eine Wärmeleitschicht angeordnet sein, sodass der Übergangswiderstand möglichst gering ist. Bei der Wärmeleitschicht kann es sich insbesondere um Wärmeleitpads und/oder Wärmeleitpaste handeln.

Insbesondere handelt es sich bei dem Feldgerät um ein Radarmessgerät zur Messung eines Füllstandes. Das Radarmessgerät weist dann eine Elektronik mit Radarchip (Transducer) am ersten, prozessfernen Ende und ein Sensorelement (Antenne und insbesondere zusätzlich eine Linse) am zweiten, prozessnahen Ende auf. Ferner weist das Radarmessgerät einen Hohlleiter auf, wobei sich der Hohlleiter von dem Sensorelement (Antenne und insbesondere Linse) zur Elektronik (Radarchip) erstreckt. Der Hohlleiter ist insbesondere Teil des zweiten Wärmeleitpfades hoch zur Elektronik. Insbesondere ist der Hohlleiter kontaktlos zum Gehäuse angeordnet, d.h. der Hohlleiter steht nicht in unmittelbarem Kontakt mit dem Gehäuse. Der Hohlleiter ist nur mittelbar, insbesondere über das Zwischenstück mit dem Gehäuse verbunden. Zwischen dem Hohlleiter und dem Zwischenstück kann zudem thermisch isolierendes Material angeordnet sein, wie z.B. eine Lage aus Kunststoff und/oder es sind Kerben und Spalte dazwischen ausgebildet. Ferner ist insbesondere die Kontaktfläche zwischen Hohlleiter und Zwischenstück minimiert. Der Übergangswiderstand zwischen dem Zwischenstück und dem Hohlleiter kann auch durch ein Gewinde, mittels welchen der Hohlleiter an dem Zwischenstück befestigt ist, reduziert sein.

Zudem kann es sich bei dem Hohlleiter um ein Bauelement aus einem thermisch isolierenden Material handeln, welches innenseitig metallisiert ist. Der Hohlleiter kann zum Beispiel aus einem thermisch stabilen Kunststoff oder einer Keramik sein. Hierdurch kann eine Wärmeleitung entlang des Hohlleiters weiter reduziert werden.

Um die Wärme von dem prozessnahen Ende zum Abstrahlbereich zu führen, ist die Wandstärke des Gehäuses im Abstrahlbereich mindestens doppelt so groß und vorzugsweise mindestens 3,5-mal so groß wie die Wandstärke des daran in Richtung des ersten prozessfernen Endes angrenzenden Gehäuseabschnittes.

Alternativ oder in Ergänzung dazu ist Wandstärke des Gehäuses im Abstrahlbereich mindestens dreimal und bevorzugt viermal so groß ist wie Wandstärke des Hohlleiters.

Insbesondere umgibt das Gehäuse den Hohlleiter außenseitig und das Gehäuse weist einen größeren Durchmesser auf als der Hohlleiter. Hier ist die wirksame Querschnittsfläche des Abstrahlbereiches, d.h. die Querschnittsfläche, welche senkrecht zum thermischen Fluss ausgerichtet ist, größer als die wirksame Querschnittsfläche des Hohlleiters. Insbesondere ist die wirksame Querschnittsfläche des Gehäuses im Abstrahlbereich mindestens 10-mal so groß, und bevorzugt mindestens 50-fach so groß, wie die wirksame Querschnittsfläche des Hohlleiters.

Insbesondere nimmt die Wandstärke des Gehäuses vom zweiten, prozessnahen Ende bis zum ersten, prozessfernen Ende mindestens in einem Bereich ab. Vorzugsweise erfolgt die Abnahme unmittelbar auf der prozessabgewandten Seite des Abstrahlbereiches, insbesondere am Übergang vom Prozessanschluss zu einem weiteren Gehäuseabschnitt. Die Wandstärke nimmt insbesondere sprunghaft ab.

Weiterhin kann eine Isolierstruktur zwischen dem Abstrahlbereich und dem in Richtung des prozessfernen Ende angrenzenden Abschnittes des Gehäuses angeordnet sein. So kann das Gehäuse mehrteilig sein oder es kann ein Einlegeteil in dem Gehäuse angeordnet sein. Bei der Isolierstruktur kann es sich um einen Spalt (gefüllt oder evakuiert) oder auch um ein Einsetzteil, insbesondere aus einem thermisch isolierenden Material, bspw. Kunststoff handeln.

Insbesondere beträgt der thermische Widerstand des Gehäuses im Abstrahlbereich maximal die Hälfte und bevorzugt maximal 1/3 des thermischen Widerstandes des daran in Richtung des ersten prozessfernen Endes angrenzenden Gehäuseabschnittes. Der Abstrahlbereich ist insbesondere aus Edelstahl, Aluminium, Messing, Titan oder Kupfer. Das daran angrenzende Gehäuse kann aus Edelstahl oder Kunststoff sein.

Ferner beträgt der thermische Widerstand des Gehäuses im Abstrahlbereich insbesondere maximal 1/10 und bevorzugt maximal 1/50 des thermischen Widerstandes des Hohlleiters.

Alternativ oder in Ergänzung dazu beträgt der thermische Widerstand des Zwischenstückes maximal 1/100 und bevorzugt maximal 1/270 des thermischen Widerstandes des Hohlleiters und/oder maximal die Hälfte und bevorzugt maximal 1/3,5 des thermischen Widerstandes des Prozessanschlusses. Das Zwischenstück ist insbesondere aus Aluminium oder Messing.

Die Wärmelableitung über den Abstrahlbereich kann weiter verbessert werden, wenn das Gehäuse im Bereich des Abstrahlbereiches außenseitig Kühlstrukturen aufweist. Hierbei können auf der Außenseite des Gehäuses beispielsweise Kühlrippen, ein Kühlkörper und/oder ein Wärmetauscher angeordnet oder ausgebildet sein.

Weitere praktische Ausführungsformen sind nachfolgend in Zusammenhang mit der Figur beschrieben. Es zeigt:

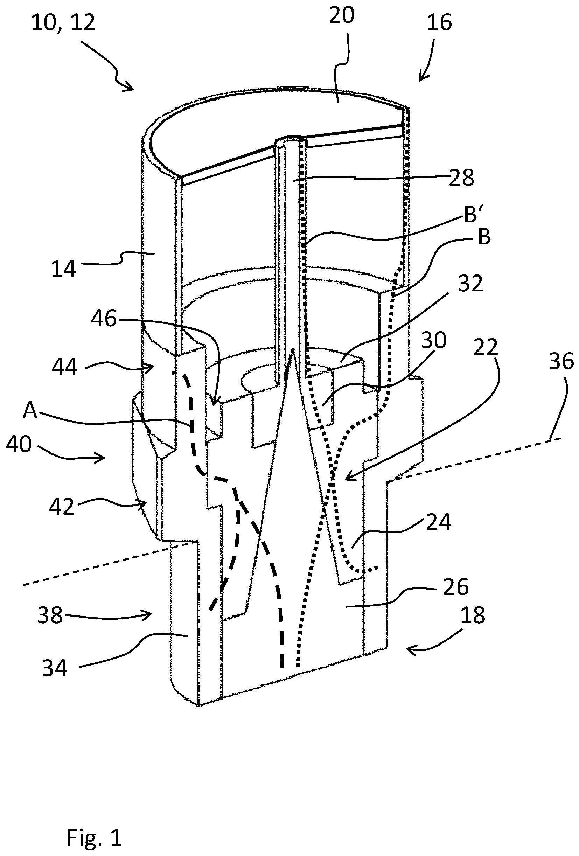

- Fig. 1: ein Feldgerät in einer schematischen Darstellung im Querschnitt.

In Fig. 1 ist ein Feldgerät 10 dargestellt, wobei es sich hier bei dem Feldgerät 10 um einen Radarmessgerät 12 handelt. Das Feldgerät 10 weist ein Gehäuse 14 auf, welches ein erstes, prozessfernes Ende 16 und ein zweites, prozessnahes Ende 18 aufweist.

An dem ersten, prozessfernen Ende 16 des Gehäuses 12 ist innerhalb des Gehäuses 12 eine Elektronik 20 angeordnet.

An dem zweiten, prozessnahen Ende 18 ist ein mehrteiliges Sensorelement 22 angeordnet, wobei hier als Teil des Sensorelementes 22 die von einem Zwischenstück 24 geformte Hornantenne und eine dielektrische Linse 26 angeordnet sind. Das Zwischenstück 24 kann wie in Fig. 1 gezeigt als separates Bauteil ausgebildet sein oder alternativ einstückig mit dem Gehäuse 14.

Zwischen dem Sensorelement 22 und der Elektronik 20 erstreckt sich in Längsrichtung des Gehäuses 12 ein Hohlleiter 28. Über den Hohlleiter 28 werden emittierte Radarstrahlen von der Elektronik 20 in die Linse 26 eingekoppelt, nach der Reflektion werden die Radarstrahlen umgekehrt mittels des Hohlleiters 28 zur Elektronik 20 geleitet. An seinem prozessnahen Ende weist der Hohlleiter 28 einen Sockel 30 auf, mittels welchem der Hohlleiter 28 in einer entsprechenden Vertiefung in dem Zwischenstück 24 eingeschraubt ist. Das Zwischenstück 24 weist hierzu einen ringförmigen Vorsprung 32 auf.

Ferner weist das Gehäuse 14 am zweiten, prozessnahen Ende 18 einen Prozessanschluss 34 auf, welcher dazu dient, das Gehäuse 14 an einem Behälter zu befestigen. Hier ist die Oberseite des Behälters durch die gestrichelte Linie 36 visualisiert.

Der Prozessanschluss 34 weist in der dargestellten Ausführungsform einen Kontaktbereich 38 auf, welcher hier ein Gewindeabschnitt ist. Der Kontaktbereich 38 steht mit einem Behälter in Kontakt. An der prozessabgewandten Seite des Kontaktbereiches 38 weist der Prozessanschluss 34 einen Außenabschnitt 40 auf, welcher außerhalb des Behälters liegt. Der Außenabschnitt 40 umfasst in der vorliegend gezeigten Ausführungsform einen Angriffsabschnitt 42 und einen Abstrahlbereich 44. Der Angriffsabschnitt 42 ist als Sechskant ausgebildet und dient zum Beispiel als Angriffsfläche für ein Werkzeug zum Einschrauben des Feldgerätes 10 in einen Behälter.

Der Abstrahlbereich 44 ist an dem prozessabgewandten Ende des Prozessanschlusses 34 angeordnet und direkt benachbart zum Angriffsabschnitt 42. Der Abstrahlbereich 44 ist als Stutzen einstückig mit dem Prozessanschluss 34 ausgebildet.

Im Folgenden wird anhand der Figur die Wärmeableitung in dem Feldgerät 10 beschrieben.

Wärme wird in dem Feldgerät insbesondere über den Prozessanschluss 34 - und hier vor allem über den Gewindeabschnitt und die Linse 26 - eingetragen.

Das Gehäuse 14 mit dem Sensorelement 22, dem Prozessanschluss 34 und dem Hohlleiter 28 ist derart ausgelegt, dass der thermische Widerstand eines ersten Wärmeleitpfades A von dem zweiten, prozessnahen Ende 18 zum Abstrahlbereich 44 kleiner ist als der thermische Widerstand mindestens eines zweiten Wärmeleitpfades B vom zweiten, prozessnahen Ende 18 zur Elektronik 20. Die Weglänge des ersten Wärmeleitpfades A ist hier kleiner als die Weglänge des zweiten Wärmeleitpfades B.

Als zweiter Wärmeleitpfad Pfad B wird hier ein Wärmeleitpfad B von dem Prozessanschluss 34 bzw. die Linse 26 über das Zwischenstück 24, den Abstrahlbereich 44 und den daran anschließenden Gehäuseabschnitt des Gehäuses 14 angesehen oder ein Wärmeleitpfad B' von dem Prozessanschluss 34 bzw. der Linse 26 über das Zwischenstück 24 und den Hohlleiter 28 jeweils bis zur Elektronik 20.

Um die Wärme möglichst zum Abstrahlbereich 44 zu leiten, weist das Zwischenstück 24 eine hohe Wärmeleitfähigkeit auf. Das Zwischenstück 24 steht in unmittelbarem Kontakt mit dem Angriffsabschnitt 42, welcher die Wärme auf den Abstrahlbereich 44 überträgt. Gegebenenfalls kann noch ein Wärmeleitpad oder Wärmeleitpaste genutzt werden, um den Übergangswiderstand zwischen Kontaktbereich 38 und Zwischenstück 24 bzw. zwischen Linse 26 und Zwischenstück 24 zu verbessern. Ebenso kann der Übergang zwischen Angriffsabschnitt 42 und Zwischenstück 24 durch ein Wärmleitpad oder Wärmeleitpaste verbessert sein.

Beim Übergang vom Abstrahlbereich 44 zum daran angrenzenden Gehäuse 14 nimmt die Wandstärke des Gehäuses 14 sprunghaft ab. Durch die geringe Wandstärke weist das Gehäuse 14 an dem an den Abstrahlbereich 44 angrenzenden Abschnitt einen erhöhten thermischen Widerstand auf.

Der Hohlleiter 28 ist in das Zwischenstück 24 eingeschraubt, so dass der Wärmeübertrag zwischen dem Hohlleiter 28 und dem Zwischenstück 24 minimiert ist. Zudem weist der Hohlleiter 28 eine geringe Wandstärke mit erhöhtem thermischem Widerstand auf. Der Hohlleiter 28 steht nicht in unmittelbarem Kontakt mit dem Gehäuse 14.

Um ferner den Hohlleiter 28 weiter thermisch vom Gehäuse 14 und Abstrahlbereich 44 zu entkoppeln, ist zwischen dem Gehäuse 14 und dem ringförmigen Vorsprung 32 des Zwischenstückes 24, welcher den Hohlleiter 28 aufnimmt, ein Spalt 46 ausgebildet.

### Bezugszeichenliste

- 10: Feldgerät
- 12: Radarmessgerät
- 14: Gehäuse
- 16: erstes, prozessfernes Ende
- 18: zweites, prozessnahes Ende
- 20: Elektronik
- 22: Sensorelement
- 24: Zwischenstück
- 26: Linse
- 28: Hohlleiter
- 30: Sockel
- 32: ringförmiger Vorsprung
- 34: Prozessanschluss
- 36: Behälteroberfläche
- 38: Kontaktbereich
- 40: Außenbereich
- 42: Angriffsabschnitt
- 44: Abstrahlbereich
- 46: Spalt

- A: erster Wärmeleitpfad
- B: zweiter Wärmeleitpfad
- B': zweiter Wärmeleitpfad

## Patentansprüche

1. Feldgerät mit einem Gehäuse (14), wobei das Gehäuse (14) ein erstes, prozessfernes Ende (16) und ein zweites, prozessnahes Ende (18) aufweist und wobei in dem Gehäuse (14) an dem ersten, prozessfernen Ende (16) eine Elektronik (20) angeordnet ist, und wobei in dem Gehäuse (14) an dem zweiten, prozessnahen Ende (18) ein Sensorelement (22) angeordnet ist und wobei das Gehäuse (14) an dem zweiten, prozessnahen Ende (18) einen Prozessanschluss (34) aufweist, wobei das Feldgerät (10) einen ersten Wärmeleitpfad (A) aufweist, welcher sich von dem zweiten, prozessnahen Ende (18) zu einem Abstrahlbereich (44) erstreckt und mindestens einen zweiten Wärmeleitpfad (B, B'), welcher sich von dem zweiten prozessnahen Ende (18) zur Elektronik (20) erstreckt, wobei die Weglänge des ersten Wärmeleitpfades (A) kleiner ist als die Weglänge des zweiten Wärmeleitpfades (B, B') und wobei die Wärmeleitpfade (A, B, B') so ausgelegt sind, dass der thermische Widerstand des ersten Wärmeleitpfades (A) geringer ist als der thermische Widerstand des zweiten Wärmeleitpfades (B, B'), **dadurch gekennzeichnet, dass** der Abstrahlbereich (44) an dem Prozessanschluss (34) angeordnet ist und einstückig mit dem Prozessanschluss (34) ausgebildet ist.

2. Feldgerät nach dem vorstehenden Anspruch,
**dadurch gekennzeichnet, dass**
der Abstrahlbereich (44) an einer dem Prozess abgewandten Seite des Prozessanschlusses (34) angeordnet ist.

3. Feldgerät nach einem der vorstehenden Ansprüche,
**dadurch gekennzeichnet, dass**
der Prozessanschluss (34) zweiteilig ausgebildet ist und einen Kontaktabschnitt (38) und einen Außenabschnitt (40) aufweist.

4. Feldgerät nach einem der vorstehenden Ansprüche,
**dadurch gekennzeichnet, dass**
in dem Gehäuse (14) ein Zwischenstück (24) angeordnet ist, welches sich von dem zweiten, prozessnahen Ende (18) in Richtung des ersten, prozessfernen Endes (16) erstreckt, und wobei das Zwischenstück (24) an seinem prozessabgewandten Ende beabstandet zum Abstrahlbereich (44) angeordnet ist.

5. Feldgerät nach einem der vorstehenden Ansprüche,
**dadurch gekennzeichnet,**
**dass** es sich bei dem Feldgerät (10) um ein Radarmessgerät (12) zur Messung eines Füllstandes handelt, wobei das Radarmessgerät (12) einen Hohlleiter (28) aufweist, wobei der Hohlleiter (28) keinen unmittelbaren Kontakt zum Gehäuse (14) aufweist.

6. Feldgerät nach einem der vorstehenden Ansprüche,
**dadurch gekennzeichnet, dass**
a) die Wandstärke des Gehäuses (14) im Abstrahlbereich (44) mindestens doppelt so groß ist wie die Wandstärke des daran in Richtung des ersten prozessfernen Endes angrenzenden Gehäuseabschnittes,
b) die Wandstärke des Gehäuses (14) im Abstrahlbereich (44) mindestens viermal so groß ist wie Wandstärke des Hohlleiters (28), und/oder
c) die wirksame Querschnittsfläche des Gehäuses (14) im Abstrahlbereich mindestens 10-mal so groß wie die wirksame Querschnittsfläche des Hohlleiters (28).

7. Feldgerät nach einem der vorstehenden Ansprüche,
**dadurch gekennzeichnet, dass**
die Wandstärke des Gehäuses (14) vom zweiten, prozessnahen Ende (18) bis zum ersten, prozessfernen Ende (16) mindestens in einem Bereich abnimmt.

8. Feldgerät nach einem der vorstehenden Ansprüche,
**dadurch gekennzeichnet, dass**
a) der thermische Widerstand des Gehäuses (14) im Abstrahlbereich (44) maximal 1/3 des thermischen Widerstandes des daran in Richtung des ersten prozessfernen Endes angrenzenden Gehäuseabschnittes beträgt,
b) der thermische Widerstand des Gehäuses (14) im Abstrahlbereich (44) maximal 1/10 des thermischen Widerstandes des Hohlleiters (28) beträgt,
und/oder
c) der thermische Widerstand des Zwischenstückes (24) maximal 1/100 des thermischen Widerstands des Hohlleiters (28) beträgt und/oder maximal halb so groß wie der thermische Widerstand des Prozessanschlusses (34) ist.

## Claims

1. A field device with a housing (14), wherein the housing (14) has a first end (16) distant from the process and a second end (18) close to the process, and wherein in the housing (14) at the first end (16) distant from the process an electronic system (20) is arranged, and wherein in the housing (14) at the second end (18) close to the process a sensor element (22) is arranged, and wherein the housing (14) has at the second end (18) close to the process a process connection (34),
wherein
the field device (10) has a first heat conduction path (A), which extends from the second end (18) close to the process to an emitting region (44), and at least one second heat conduction path (B, B'), which extends from the second end (18) close to the process to the electronic system (20), wherein the length of the first heat conduction path (A) is smaller than the length of the second heat conduction path (B, B'), and wherein the heat conduction paths (A, B, B') are designed such that the thermal resistance of the first heat conduction path (A) is lower than the thermal resistance of the second heat conduction path (B, B'), **characterized in that** the emitting region (44) is arranged on the process connection (34) and is formed integrally with the process connection (34).

2. The field device according to the preceding claim,
**characterized in that**
the emitting region (44) is arranged on a side of the process connection (34) facing away from the process.

3. The field device according to any of the preceding claims,
**characterized in that**
the process connection (34) has a two-part configuration and has a contact portion (38) and an outer portion (40).

4. The field device according to any of the preceding claims,
**characterized in that**
an intermediate member (24), which extends from the second end (18) close to the process in the direction of the first end (16) distant from the process, is arranged in the housing (14), and wherein the intermediate member (24) is arranged at its end facing away from the process in a spaced-apart manner from the emitting region (44).

5. The field device according to any of the preceding claims,
**characterized in that**
the field device (10) is a radar measuring device (12) for measuring a filling level, wherein the radar measuring device (12) has a hollow conductor (28), wherein the hollow conductor (28) has no direct contact to the housing (14).

6. The field device according to any of the preceding claims,
**characterized in that**
a) the wall thickness of the housing (14) is in the emitting region (44) at least twice as large as the wall thickness of the housing portion adjacent in the direction of the first end distant from the process,
b) the wall thickness of the housing (14) is in the emitting region (44) at least four times as large as the wall thickness of the hollow conductor (28),
and/or
c) the effective cross-sectional surface area of the housing (14) is in the emitting region at least 10-times as large as the effective cross-sectional surface area of the hollow conductor (28).

7. The field device according to any of the preceding claims,
**characterized in that**
the wall thickness of the housing (14) decreases from the second end (18) close to the process to the first end (16) distant from the process in at least one region.

8. The field device according to any of the preceding claims,
**characterized in that**
a) the thermal resistance of the housing (14) in the emitting region (44) amounts to a maximum of 1/3 of the thermal resistance of the housing portion adjacent in the direction of the first end distant from the process,
b) the thermal resistance of the housing (14) in the emitting region (44) amounts to a maximum of 1/10 of the thermal resistance of the hollow conductor (28),
and/or
c) the thermal resistance of the intermediate member (24) amounts to a maximum of 1/100 of the thermal resistance of the hollow conductor (28) and/or is a maximum of half the size of the thermal resistance of the process connection (34).

## Revendications

1. Appareil de terrain avec un boîtier (14), dans lequel le boîtier (14) présente une première extrémité (16) éloignée du processus et une seconde extrémité (18) proche du processus, et dans lequel une électronique (20) est disposée dans le boîtier (14) à la première extrémité (16) éloignée du processus, et dans lequel un élément capteur (22) est disposé dans le boîtier (14) à la seconde extrémité (18) proche du processus et dans lequel le boîtier (14) présente à la seconde extrémité (18) proche du processus un raccord de processus (34), dans lequel l'appareil de terrain (10) présente un premier chemin de conduction thermique (A) qui s'étend de la seconde extrémité (18) proche du processus à une zone de rayonnement (44) et au moins un second chemin de conduction thermique (B, B') qui s'étend de la seconde extrémité (18) proche du processus à l'électronique (20), dans lequel la longueur de cheminement du premier chemin de conduction thermique (A) est inférieure à la longueur de cheminement du second chemin de conduction thermique (B, B') et dans lequel les chemins de conduction thermique (A, B, B') sont conçus de sorte que la résistance thermique du premier chemin de conduction thermique (A) soit inférieure à la résistance thermique du second chemin de conduction thermique (B, B'), **caractérisé en ce que** la zone de rayonnement (44) est disposée sur le raccord de processus (34) et est réalisée d'une seule pièce avec le raccord de processus (34).

2. Appareil de terrain selon la revendication précédente,
**caractérisé en ce que**
la zone de rayonnement (44) est disposée sur un côté du raccord de processus (34) opposé au processus.

3. Appareil de terrain selon l'une quelconque des revendications précédentes,
**caractérisé en ce que**
le raccord de processus (34) est réalisé en deux parties et présente une section de contact (38) et une section extérieure (40).

4. Appareil de terrain selon l'une quelconque des revendications précédentes,
**caractérisé en ce que**
une pièce intermédiaire (24) est disposée dans le boîtier (14), laquelle s'étend à partir de la seconde extrémité (18) proche du processus en direction de la première extrémité (16) éloignée du processus, et dans lequel la pièce intermédiaire (24) est disposée à son extrémité éloignée du processus, à distance de la zone de rayonnement (44).

5. Appareil de terrain selon l'une quelconque des revendications précédentes,
**caractérisé en ce**
**que** l'appareil de terrain (10) est un appareil de mesure radar (12) pour la mesure d'un niveau de remplissage, dans lequel l'appareil de mesure radar (12) présente un guide d'onde (28), dans lequel le guide d'onde (28) n'a pas de contact direct avec le boîtier (14).

6. Appareil de terrain selon l'une quelconque des revendications précédentes,
**caractérisé en ce que**
a) l'épaisseur de paroi du boîtier (14) dans la zone de rayonnement (44) est au moins deux fois plus grande que l'épaisseur de paroi de la section de boîtier adjacente à celle-ci en direction de la première extrémité éloignée du processus,
b) l'épaisseur de paroi du boîtier (14) dans la zone de rayonnement (44) est au moins quatre fois plus grande que l'épaisseur de paroi du guide d'ondes (28), et/ou
c) la surface de section efficace du boîtier (14) dans la zone de rayonnement est au moins 10 fois plus grande que la surface de section efficace du guide d'ondes (28).

7. Appareil de terrain selon l'une quelconque des revendications précédentes,
**caractérisé en ce que**
l'épaisseur de paroi du boîtier (14) de la seconde extrémité (18) proche du processus à la première extrémité (16) éloignée du processus diminue au moins dans une zone.

8. Appareil de terrain selon l'une quelconque des revendications précédentes, **caractérisé en ce que**
a) la résistance thermique du boîtier (14) dans la zone de rayonnement (44) est au maximum égale à 1/3 de la résistance thermique de la section de boîtier adjacente à celle-ci en direction de la première extrémité éloignée du processus,
b) la résistance thermique du boîtier (14) dans la zone de rayonnement (44) atteint au maximum 1/10 de la résistance thermique du guide d'ondes (28), et/ou
c) la résistance thermique de la pièce intermédiaire (24) atteint au maximum 1/100 de la résistance thermique du guide d'ondes (28) et/ou est au maximum deux fois plus petite que la résistance thermique du raccord de processus (34).
